# EUROPÄISCHE PATENTSCHRIFT

(11) **EP 3 859 127 B1**
(45) Veröffentlichungstag und Bekanntmachung des Hinweises auf die Patenterteilung: **08.01.2025**
(21) Anmeldenummer: 20154683.5
(22) Anmeldetag: 30.01.2020
(51) Int. Cl.: F01K 25/06, F25B 15/04

(54) **VERFAHREN ZUM BEREITSTELLEN VON ENERGIE UND SORPTIONSANLAGE**
METHOD FOR PROVIDING ENERGY AND SORPTION PLANT
PROCÉDÉ DE FOURNITURE D'ÉNERGIE ET SYSTÈME À SORPTION

(43) Veröffentlichungstag der Anmeldung: 04.08.2021
(73) Patentinhaber: AGO Technologie GmbH, 95326 Kulmbach (DE)
(72) Erfinder: RAMMING, Klaus, 95336 Mainleus (DE)
(74) Vertreter: Bauer, Dirk

(56) Entgegenhaltungen:
- EP-A1- 3 540 332
- EP-A1- 3 540 333
- EP-A2- 2 803 923

## Beschreibung

Die Erfindung betrifft zunächst ein Verfahren gemäß Anspruch 1 zum Bereitstellen von Energie, wobei elektrische Energie als chemische Energie gespeichert und zum Rückumwandeln in die elektrische Energie bereitgestellt wird. Solche Verfahren sind beispielsweise bekannt zum Betrieb von Batterien.

Die Erfindung betrifft weiterhin eine Sorptionsanlage gemäß Anspruch 3 mit Kältemittel, flüssigem

Lösungsmittel, einer an dem Kältemittel armen und einer an dem Kältemittel reichen Lösung, wobei die arme und die reiche Lösung einphasige Mischungen des Lösungsmittels und des Kältemittels sind, sowie mit einem Absorber zum Absorbieren des Kältemittels in der armen Lösung unter Abgabe von Wärme, einem Austreiber zum Austreiben des Kältemittels aus der reichen Lösung hinter dem Absorber unter Aufnahme eines ersten von außen zugeführten Wärmestroms, einer Lösungsmittelpumpe zum Pumpen der armen Lösung aus dem Austreiber in den Absorber, einem Verflüssiger zum Verflüssigen des Kältemittels aus dem Austreiber, einem Verdichter zum Saugen des Kältemittels aus dem Austreiber einem Verdampfer zum Verdampfen des Kältemittels aus dem Verflüssiger unter Aufnahme eines zweiten von außen zugeführten Wärmestroms vor dem Absorber, einem Kältemittelsammler hinter dem Verflüssiger, und einer Kältemittelpumpe zum Pumpen des Kältemittels aus dem Kältemittelsammler zu dem Verdampfer.

Das Dokument EP2803923 A2 offenbart eine Sorptionsanlage. Wang J et al. "Analysis of a compression-assisted absorption heat transformer", 12th Heat Pump Conference (Proceedings), Rotterdam, 2017 schlägt vor, in einer solchen als Wärmetransformator genutzten Sorptionsanlage mit dem Verdichter den Eintrittsdruck des Kältemittels in den Verflüssiger zu erhöhen, um den Energieaufwand insbesondere zur Deckung des Warmwasserbedarfs und für die Niedertemperaturheizung von Wohnräumen zu vermindern.

Im Hintergrund der Erfindung offenbart Xu ZY et al. "Absorption seasonal thermal storage cycle with high energy storage density through multi-stage output", Energy 167 (2019*)* einen auf Absorptionsprozessen basierenden Saisonspeicher für Wärme. Weiterhin ist es allgemein bekannt, Sorptionsanlagen als Wärmepumpe zu nutzen.

### Aufgabe

Der Erfindung liegt die Aufgabe zugrunde, einen neuartigen Energiespeicher vorzuschlagen.

### Lösung

Ausgehend von dem bekannten Verfahren wird nach der Erfindung vorgeschlagen, dass in einer Sorptionsanlage mit Kältemittel und flüssigem Lösungsmittel, einer an dem Kältemittel armen und einer an dem Kältemittel reichen Lösung, wobei die arme und die reiche Lösung einphasige Mischungen des Lösungsmittels und des Kältemittels sind, zum Bereitstellen das flüssige Kältemittel auf einem Hochdruckniveau verdampft und auf ein Niederdruckniveau entspannt wird und dabei eine Expansionsmaschine antreibt, die arme Lösung das dampfförmige Kältemittel absorbiert, und als reiche Lösung gesammelt wird, und dass zum Speichern stattdessen das Kältemittel auf dem Niederdruckniveau aus der reichen Lösung ausgetrieben, die verbleibende arme Lösung gesammelt, und das ausgetriebene Kältemittel mittels der elektrischen Energie verdichtet, verflüssigt und gesammelt wird.

Das erfindungsgemäße Verfahren nutzt eine im Wesentlichen bekannte Sorptionsanlage als Energiespeicher, wobei elektrische Energie als chemische Energie im ausgetriebenen Kältemittel auf dem Hochdruckniveau gespeichert und durch Entspannen des Kältemittels auf das Niederdruckniveau wieder bereitgestellt wird.

Vorzugsweise wird in einem erfindungsgemäßen Verfahren mittels eines der Sorptionsanlage von außen zugeführten Wärmestroms das flüssige Kältemittel verdampft und/oder das Kältemittel aus der reichen Lösung ausgetrieben. Ein solches erfindungsgemäßes Verfahren nutzt vorzugsweise industrielle Abwärme, um die bereitgestellte elektrische Energie zu erhöhen.

Ausgehend von der bekannten Sorptionsanlage wird nach der Erfindung vorgeschlagen, eine Absperrvorrichtung für den Verflüssiger vorzusehen, wobei der Verdichter vor der Absperrvorrichtung an einer Druckseite mit einer Kältemittelleitung zwischen dem Verdampfer und dem Absorber verbunden ist. Eine solche Sorptionsanlage ermöglicht durch wahlweises Öffnen oder Schließen der Absperrvorrichtung bzw. Antrieb des Verdichters und der Lösungsmittelpumpe zwei getrennte Betriebszustände der Sorptionsanlage, insbesondere einerseits zum Speichern, andererseits zum Bereitstellen von Energie, aber auch wahlweise zum Betrieb als Wärmepumpe oder als Wärmetransformator.

Für den Betrieb der Sorptionsanlage als Wärmepumpe wird der Verflüssiger mittels der Absperrvorrichtung von der Kältemittelleitung getrennt und der Austreiber über den Verdichter mit dem Absorber verbunden. Für den Betrieb als Wärmetransformator bleibt der Verdichter antriebslos und der Austreiber wird mit dem Verflüssiger verbunden.

Vorzugsweise weist eine erfindungsgemäße Sorptionsanlage ein Drosselelement auf zum Entspannen der reichen Lösung zwischen dem Absorber und dem Austreiber. Die Druckminderung zwischen Absorber und Austreiber ist für den Betrieb als Wärmetransformator oder als Wärmepumpe erforderlich.

Alternativ vorzugsweise weist eine erfindungsgemäße Sorptionsanlage eine Expansionsmaschine auf zum Entspannen des Kältemittels zwischen dem Verdampfer und dem Absorber, und einen Lösungssammler zum Sammeln der reichen Lösung zwischen dem Absorber und dem Austreiber. Eine solche Sorptionsanlage erlaubt den Betrieb als Energiespeicher: Zum Laden des Energiespeichers wird das Kältemittel aus der im Lösungssammler gesammelten reichen Lösung im Austreiber ausgetrieben, im Verdichter auf Hochdruck verdichtet, im Verflüssiger verflüssigt und im Kältemittelsammler gesammelt. Zum Entladen wird das Kältemittel im Verdampfer verdampft, in der Expansionsmaschine wieder auf Niederdruck entspannt und im Absorber in der armen Lösung absorbiert, die dann im Lösungssammler gesammelt wird.

Zum Austreiben des Kältemittels aus dem Lösungsmittel und zum Verdichten auf ein Hochdruckniveau wird Energie aufgewendet, die durch Entspannen des Kältemittels auf Niederdruck und Lösen in der armen Lösung wieder freigegeben wird.

Weiter vorzugsweise weist eine solche erfindungsgemäße Sorptionsanlage mindestens eine weitere Lösungsmittelpumpe für jeweils die arme und/oder die reiche Lösung von dem Absorber zu dem Lösungssammler, von dem Austreiber zu dem Lösungssammler, von dem Lösungssammler zu dem Absorber und/oder von dem Lösungssammler zu dem Austreiber auf. Mittels der weiteren Lösungsmittelpumpe(n) lässt sich die Konzentration der Lösung im Lösungssammler beim Laden des Energiespeichers weiter absenken und beim Entladen weiter erhöhen.

Weiter vorzugsweise ist in einer solchen erfindungsgemäßen Sorptionsanlage der Lösungssammler ein Schichtenspeicher. In dem Lösungssammler steigt dann mit zunehmender Höhe die Konzentration des Kältemittels in der Lösung. Am Boden des Lösungssammlers kann so zum Entladen des Energiespeichers eine Lösung mit minimaler Konzentration des Kältemittels und zum Laden des Energiespeichers an einer höher gelegenen Entnahmestelle reiche Lösung entnommen werden.

Weiter vorzugsweise dient in einer solchen erfindungsgemäßen Sorptionsanlage eine einzelne Fluidenergiemaschine wahlweise als der Verdichter oder als die Expansionsmaschine. Durch die doppelte Nutzung der Fluidenergiemaschine je nach Betriebsfall als Verdichter oder Expansionsmaschine ist keine zweite Fluidenergiemaschine erforderlich, wodurch die Anzahl bewegter Teile, die mechanische Komplexität und die Baugröße der Sorptionsanlage vermindert werden kann.

Vorzugsweise weist eine erfindungsgemäße Sorptionsanlage einen ersten Wärmetauscher auf, der sowohl als der Austreiber als auch als der Absorber und/oder einen zweiten Wärmetauscher, der sowohl als der Verflüssiger als auch als der Verdampfer dient. Durch die doppelte Nutzung des ersten und/oder zweiten Wärmetauschers je nach Betriebsfall ist jeweils kein zweiter Wärmetauscher erforderlich, wodurch wiederum die Anzahl von Baugruppen und die Baugröße der Sorptionsanlage vermindert werden kann.

In einem Betriebsverfahren für eine erfindungsgemäße Sorptionsanlage ist in einem ersten Betriebszustand der Verdichter antriebslos und der Verflüssiger mittels der Absperrvorrichtung von der Kältemittelleitung getrennt, die Kältemittelpumpe pumpt das Kältemittel und der Verdampfer treibt das Kältemittel aus, und in einem anderen Betriebszustand führt stattdessen der Verdichter das Kältemittel in die Kältemittelleitung. Diese beiden Betriebszustände ermöglicht die erfindungsgemäße Sorptionsanlage.

Vorzugsweise entspannt in einem erfindungsgemäßen Betriebsverfahren ein Drosselelement die reiche Lösung hinter dem Absorber und pumpt die Lösungsmittelpumpe die arme Lösung, wobei in dem ersten Betriebszustand nacheinander der Verflüssiger das Kältemittel verflüssigt, die Kältemittelpumpe das Kältemittel pumpt und das Kältemittel in dem Verdampfer verdampft. In einem solchen Betriebsverfahren arbeitet die Sorptionsanlage in dem ersten Betriebszustand als Wärmetransformator, in dem andern als Wärmepumpe. Vorzugsweise wird in einem solchen Betriebsverfahren beim Übergang in den ersten Betriebszustand von dem anderen Betriebszustand ein ausgekochter Anteil des Kältemittels in dem Kältemittelsammler gesammelt. Durch das Auskochen eines Teils des Kältemittels wird das Druckniveau der Sorptionsanlage im Betrieb als Wärmetransformator auf das Druckniveau im Betrieb als Wärmepumpe gesenkt.

Weiter vorzugsweise wird in einem solchen Betriebsverfahren zum Absenken des Niederdruckniveaus der Verflüssiger vorübergehend mit der Kältemittelleitung im Hochdruckbereich der Sorptionsanlage verbunden. So wird die erforderliche Druckabsenkung besonders einfach bewirkt.

Alternativ vorzugsweise wird in einem erfindungsgemäßen Betriebsverfahren in dem ersten Betriebszustand Energie entladen, indem nacheinander eine Expansionsmaschine das Kältemittel in der Kältemittelleitung entspannt und die Energie abgibt, die arme Lösung das Kältemittel absorbiert, und ein Lösungssammler die reiche Lösung aus dem Absorber sammelt, und wobei in dem anderen Betriebszustand Energie geladen wird, indem stattdessen nacheinander die Lösungsmittelpumpe die reiche Lösung aus dem Lösungssammler in den Austreiber pumpt, der Verdichter angetrieben wird und das Kältemittel in den Verflüssiger führt, der Verflüssiger das Kältemittel verflüssigt, und der Kältemittelsammler das Kältemittel sammelt. In einem solchen Betriebsverfahren arbeitet die Sorptionsanlage als Energiespeicher.

Weiter vorzugsweise in einem solchen erfindungsgemäßen Betriebsverfahren beim Speichern der Energie der Kältemittelsammler das Kältemittel bei höchstens 50 °C. Die Sorptionsanlage benötigt dann keine aufwändige Isolation, um das Temperaturniveau des Kältemittels zu halten.

### Ausführungsbeispiele

Die Erfindung wird nachfolgend anhand von Ausführungsbeispielen erläutert. Die Figuren zeigen
- Fig. 1: eine erste erfindungsgemäße Sorptionsanlage,
- Fig. 2: den Betrieb der ersten Sorptionsanlage als Wärmetransformator, und
- Fig. 3: den Betrieb der ersten Sorptionsanlage als Wärmepumpe, sowie
- Fig. 4: eine zweite erfindungsgemäße Sorptionsanlage,
- Fig. 5: das Entladen der zweiten Sorptionsanlage als Energiespeicher, und
- Fig. 6: das Laden der zweiten Sorptionsanlage.

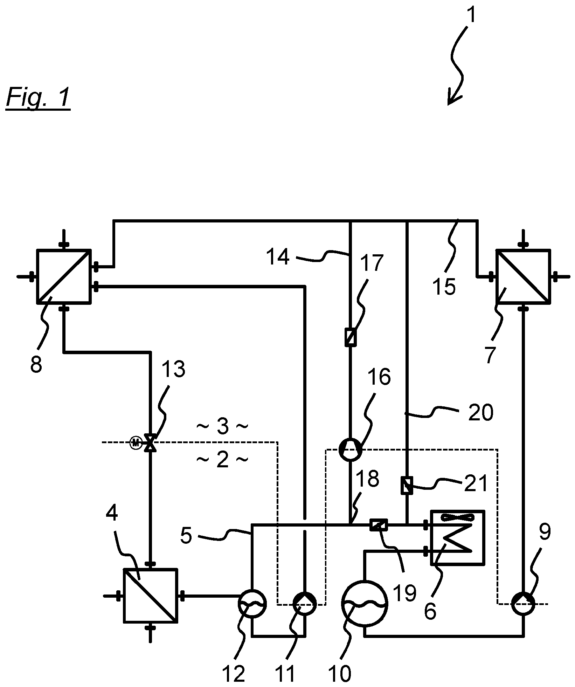

Die in Figur 1 dargestellte erste erfindungsgemäße Sorptionsanlage 1 wird mit Wasser als Lösungsmittel und Ammoniak als Kältemittel betrieben und weist einen Kreislauf mit einem Niederdruckteil 2 und einem Hochdruckteil 3 auf. Der Niederdruckteil 2 weist einen Austreiber 4 und eine Kältemitteldampfleitung 5 von dem Austreiber 4 zu einem Verflüssiger 6, der Hochdruckteil 3 einen Verdampfer 7 und einen Absorber 8 auf.

Hinter dem Verflüssiger 6 ist eine Kältemittelpumpe 9 angeordnet, um das in einem Kältemittelsammler 10 gesammelte flüssige Kältemittel aus dem Niederdruckteil 2 in den Hochdruckteil 3 zu dem Verdampfer 7 zu pumpen. Eine Lösungsmittelpumpe 11 pumpt aus einem Abscheider 12 hinter dem Austreiber 4 die verbleibende arme Lösung in den Absorber 8. Zwischen dem Absorber 8 und dem Austreiber 4 drosselt ein Regelventil 13 die reiche Lösung von dem Hochdruckteil 3 in den Niederdruckteil 2.

Vor dem Verflüssiger 6 zweigt von der Kältemitteldampfleitung 5 ein Bypass 14 in eine Kältemittelleitung 15 zwischen dem Verdampfer 7 und dem Absorber 8 ab. In dem Bypass 14 ist ein Verdichter 16 angeordnet, um das gasförmige Kältemittel aus dem Niederdruckteil 2 in den Hochdruckteil 3 zu fördern. Der Verdichter 16 ist mittels einer Rückschlagklappe 17 gegen eine Rückströmung aus dem Hochdruckteil 3 in den Niederdruckteil 2 gesichert.

Zwischen dem Abzweig 18 des Bypasses 14 und dem Verflüssiger 6 ist in der Kältemitteldampfleitung 5 eine Absperrvorrichtung 19 in Form einer Absperrklappe angeordnet. Parallel zu dem Bypass 14 zweigt zwischen der Absperrvorrichtung 19 und dem Verflüssiger 6 ein weiterer Bypass 20 zu der Kältemittelleitung 15 ab, die mit einer weiteren Absperrklappe 21 verschließbar ist.

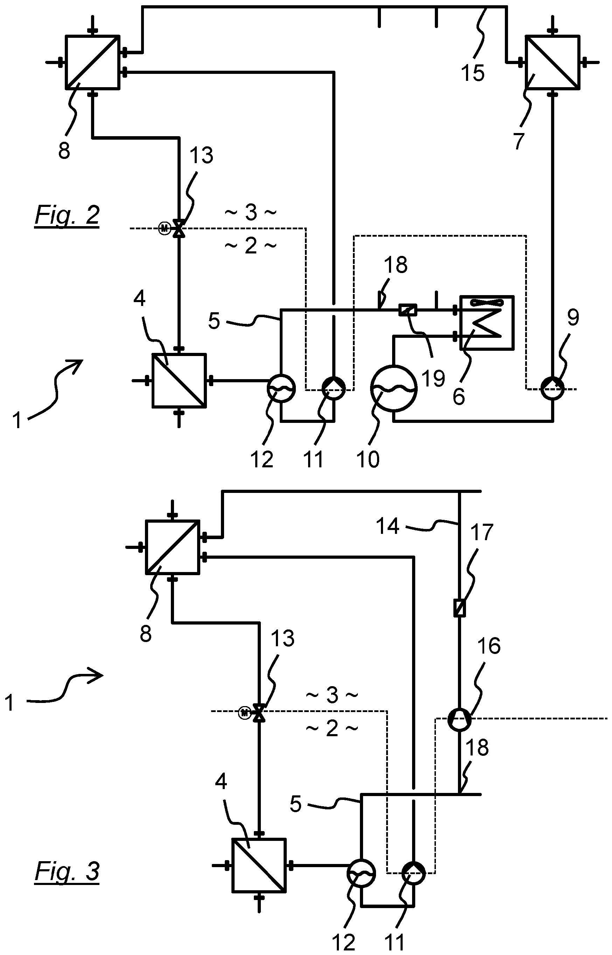

Im Betriebszustand der ersten Sorptionsanlage 1 als Wärmetransformator gemäß Figur 2 ist die Absperrvorrichtung 19 geöffnet und der Verdichter 16 antriebslos. Im Kältemittelsammler 10 weist das flüssige Kältemittel eine Temperatur von 29 °C auf, im Verdampfer 7 nimmt es aus einem Abwärmestrom eine Heizleistung von 4 *MW* auf. Der Abwärmestrom kühlt dabei von 80 auf 54 °C ab.

Im Absorber 8 wird das Kältemittel in der armen Lösung absorbiert und gibt dabei eine Heizleistung von 3,5 *MW* an ein Heizmedium ab, das von 60 °C auf 80 °C aufgeheizt wird. Die reiche Lösung nimmt im Austreiber 4 aus dem Abwärmestrom noch einmal eine Heizleistung von 4 *MW* auf, der Abwärmestrom kühlt dabei von 54 auf 45 °C weiter ab. Der Verflüssiger 6 verflüssigt mit einer Leistung von 4,5 *MW* das im Austreiber 4 ausgetriebene Kältemittel, das im Kältemittelsammler 10 gesammelt wird.

Im Betriebszustand der ersten Sorptionsanlage 1 als Wärmepumpe gemäß Figur 3 wird der Verdichter 16 mit einer Leistung von 3,8 *MW* angetrieben, die Absperrvorrichtung 19 ist geschlossen. Der Niederdruckteil 2 steht unter 4,1 *bar,* der Hochdruckteil 3 unter 20 *bar.* Die reiche Lösung kühlt im Austreiber 4 einen Abwärmestrom von 60 auf 40 °C ab, die Lösungsmittelpumpe 11 pumpt 85 *m³*/*h* arme Lösung in den Absorber 8. Dort absorbiert die arme Lösung das von dem Verdichter 16 in die Kältemittelleitung 15 geförderte Kältemittel und heizt dabei ein Heizmedium von 80 auf 120 °C auf.

Zum Umschalten vom Betriebszustand als Wärmetransformator in den Betriebszustand als Wärmepumpe wird zunächst die Absperrklappe 21 geöffnet, die Absperrvorrichtung 19 wird geschlossen und die Kältemittelpumpe 9 wird abgeschaltet.

Zum Umschalten umgekehrt vom Betriebszustand als Wärmepumpe in den Betriebszustand als Wärmetransformator wird die Absperrklappe 21 geschlossen, die Absperrvorrichtung 19 geöffnet, der Verdichter 16 außer Betrieb und der Verflüssiger 6 und die Kältemittelpumpe 9 in Betrieb genommen.

Die reiche Lösung nimmt solange das von der Kältemittelpumpe 9 in die Kältemittelleitung 15 geförderte Kältemittel auf, bis bei dem durch den Verflüssiger bestimmten Niederdruck Kältemittel ausgetrieben wird.

Die erste Sorptionsanlage 1 kann insbesondere im Sommer als Wärmetransformator und im Winter als Wärmepumpe betrieben werden: Beispielsweise kann ein Fernwärmebetreiber mit dem Wärmetransformator von Frühjahr bis Herbst industrielle Abwärme oder Geothermiewärme von einem niedrigen Temperaturniveau auf ein höheres Temperaturniveau bringen und in das Fernwärmenetz einspeisen. Im Winter bei maximalem Wärmebedarf kann er mit der Wärmepumpe die komplette zur Verfügung stehende Abwärme auf das hohe Temperaturniveau bringen.

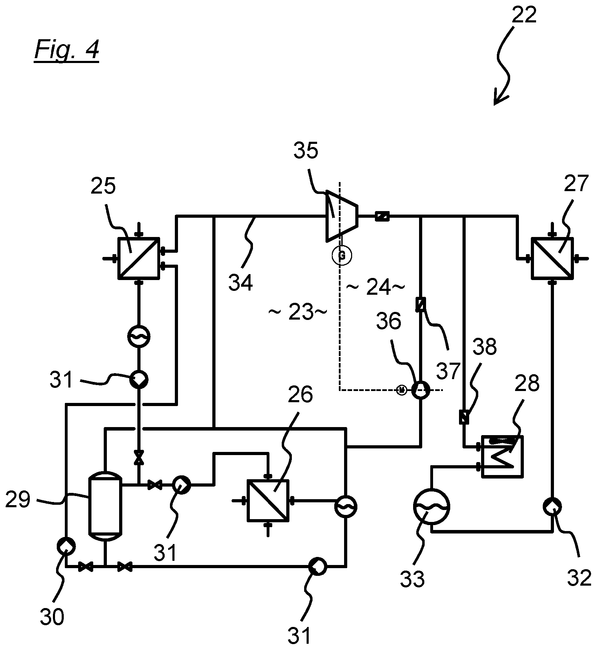

Auch die in Figur 4 dargestellte zweite erfindungsgemäße Sorptionsanlage 22 wird mit Wasser als Lösungsmittel und Ammoniak als Kältemittel betrieben und weist einen Niederdruckteil 23 unter 2,4 *bar* und einen Hochdruckteil 24 unter 20 *bar* auf. Der Niederdruckteil 23 weist einen Absorber 25 und einen Austreiber 26, der Hochdruckteil 24 einen Verdampfer 27 und einen Verflüssiger 28 auf.

Zwischen dem Absorber 25 und dem Austreiber 26 weist die zweite Sorptionsanlage 22 einen Lösungssammler 29 auf. Der Lösungssammler 29 ist als Schichtenspeicher ausgebildet, in dem sich die arme Lösung unten, die reiche Lösung oben sammelt. Von dem Lösungssammler 29 pumpt eine erste Lösungsmittelpumpe 30 die arme Lösung in den Absorber 25. Weitere Lösungsmittelpumpen 31 pumpen die reiche Lösung aus dem Lösungssammler 29 in den Austreiber 26, und die verbleibende arme Lösung aus dem Austreiber 26 sowie die reiche Lösung aus dem Absorber 25 in den Lösungssammler 29.

Hinter dem Verflüssiger 28 ist eine Kältemittelpumpe 32 angeordnet, um das in einem Kältemittelsammler 33 gesammelte flüssige Kältemittel zu dem Verdampfer 27 zu pumpen. In einer Kältemittelleitung 34 zwischen dem Verdampfer 27 und dem Absorber 25 expandiert eine Expansionsmaschine 35 das Kältemittel von dem Hochdruckteil 24 in den Niederdruckteil 23.

Hinter dem Austreiber 26 fördert ein Verdichter 36 das gasförmige Kältemittel in die Kältemittelleitung 34. Der Verdichter 36 ist mittels einer Rückschlagklappe 37 gegen eine Rückströmung aus dem Hochdruckteil 24 in den Niederdruckteil 23 gesichert. Zwischen der Kältemittelleitung 34 und dem Verflüssiger 28 ist eine Leitung mit einer Absperrvorrichtung 38 in Form einer Absperrklappe angeordnet.

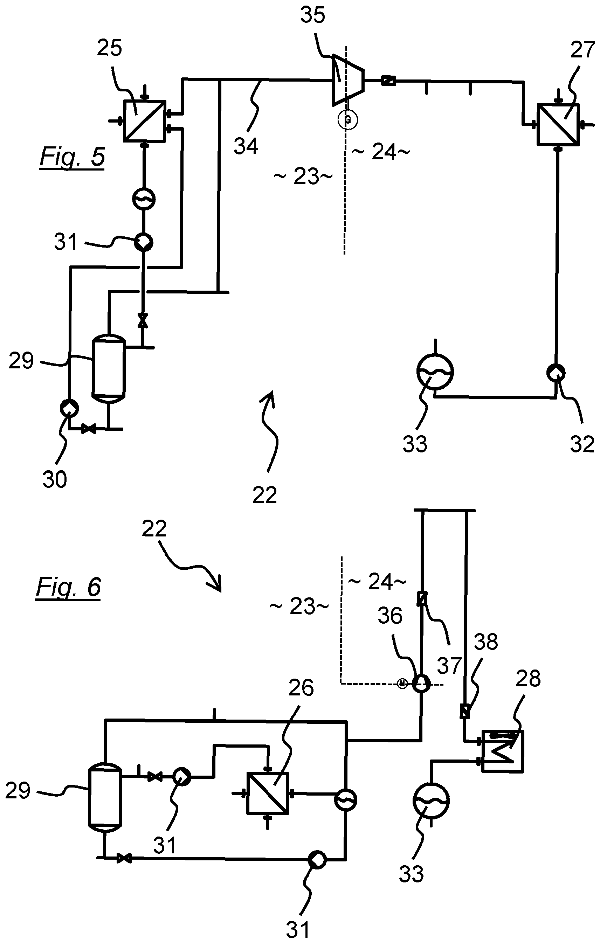

Zum Entladen von Energie aus der zweiten Sorptionsanlage 22 gemäß Figur 5 ist die Absperrvorrichtung 38 geschlossen und der Verflüssiger 28 und der Verdichter 36 außer Betrieb. Die Kältemittelpumpe 32 fördert das flüssige Kältemittel aus dem Kältemittelsammler 33 in den Verdampfer 27, wo es einen Abwärmestrom von 60 auf 50 °C abkühlt. In der Expansionsmaschine 35 wird der Kältemitteldampf auf den Niederdruck entspannt und gibt eine Leistung von 440 *kW* ab. Im Absorber 25 absorbiert die arme Lösung aus dem Lösungssammler 29 das Kältemittel und heizt ein Rückkühlmedium von 20 auf 31 °C auf.

Zum Laden von Energie in die zweite Sorptionsanlage 22 gemäß Figur 6 ist die Absperrvorrichtung 38 geöffnet und der Verflüssiger 28 und der Verdichter 36 in Betrieb. Im Austreiber 26 kühlt ein Strom von 127 *m³*/*h* der reichen Lösung aus dem Lösungssammler 29 den Abwärmestrom von 60 auf 40 °*C* ab, der Verdichter 36 fördert das ausgetriebene Kältemittel in den Verflüssiger 28, das flüssige Kältemittel wird bei 28 °*C* im Kältemittelsammler 33 gesammelt.

Die zweite Sorptionsanlage 22 erlaubt beispielsweise die Speicherung von Überschussstrom aus Wind- und Solaranlagen. Die zweite Sorptionsanlage 22 kann bei gleichbleibender Temperatur, z.B. Umgebungstemperatur betrieben werden. In diesem Fall kann der Verflüssiger 28 auch als Verdampfer 27 genutzt werden und auch darin das flüssige Kältemittel beim Entladevorgang verdampft werden. Die Effizienz des Stromspeichers ist dann gering: Es kann lediglich ca. 50 % der beim Ladevorgang zugeführten elektrischen Energie beim Entladen wieder zurückgewonnen werden.

Steht jedoch Wärme bei höherer Temperatur als die Umgebungstemperatur zur Verfügung, kann die Effizienz merklich erhöht werden. Beim Laden kann dann bei einem deutlich höheren Niederdruckniveau Kältemittel aus der reichen Lösung ausgetrieben werden. Durch das erhöhte Niederdruckniveau benötigt der Verdichter 36 weniger Strom, um das Kältemittel von Niederdruck auf Hochdruck zu verdichten.

Nutzt man beim Entladen des Speichers wiederum eine Wärmequelle mit höherer Temperatur zum Verdampfen des Kältemittels, so wird ein höherer Hochdruck erzeugt. Wird dagegen der Absorber 25 mit einem an die Umgebung Wärme abführenden Rückkühler gekühlt, kann die arme Lösung bei einem niedrigen Niederdruckniveau Kältemittel absorbieren. Die Entspannungsmaschine hat somit eine hohe Druckdifferenz zur Verfügung und kann je nach Temperaturbedingungen sogar mehr Strom erzeugen als beim Laden aufgenommen wurde, indem die Niedertemperaturwärme zum Teil in Strom umgewandelt wird.

Eine weitere Sorptionsanlage kann sowohl als Wärmetransformator oder Wärmepumpe als auch als Energiespeicher genutzt werden. Bei Stromüberschuss und geringem Wärmebedarf wird das auf Hochdruck verdichtete Kältemittel zum Teil kondensiert und im Kältemittelsammler 33 gespeichert. So wird weniger Kältemittel dem Absorber zugeführt und dadurch weniger Wärme auf Hochtemperaturniveau abgegeben. Bei Strombedarf wird die Verdichterleistung gedrosselt und dadurch Strom eingespart werden und stattdessen Kältemittel aus dem Kältemittelsammler 33 im Hochdruckteil verdampft und dem Absorber zugeführt.

In den Figuren sind
- 1: Sorptionsanlage
- 2: Niederdruckteil
- 3: Hochdruckteil
- 4: Austreiber
- 5: Kältemitteldampfleitung
- 6: Verflüssiger
- 7: Verdampfer
- 8: Absorber
- 9: Kältemittelpumpe
- 10: Kältemittelsammler
- 11: Lösungsmittelpumpe
- 12: Abscheider
- 13: Regelventil
- 14: Bypass
- 15: Kältemittelleitung
- 16: Verdichter
- 17: Rückschlagklappe
- 18: Abzweig
- 19: Absperrvorrichtung
- 20: Bypass
- 21: Absperrklappe
- 22: Sorptionsanlage
- 23: Niederdruckteil
- 24: Hochdruckteil
- 25: Absorber
- 26: Austreiber
- 27: Verdampfer
- 28: Verflüssiger
- 29: Lösungssammler
- 30: Lösungsmittelpumpe
- 31: Lösungsmittelpumpe
- 32: Kältemittelpumpe
- 33: Kältemittelsammler
- 34: Kältemittelleitung
- 35: Expansionsmaschine
- 36: Verdichter
- 37: Rückschlagklappe
- 38: Absperrvorrichtung

## Patentansprüche

1. Verfahren zum Bereitstellen von Energie, wobei in einem Betriebszustand zum Speichern elektrische Energie als chemische Energie gespeichert und nach Umschalten in einen Betriebszustand zum Bereitstellen die elektrische Energie bereitgestellt wird, wobei in einer Sorptionsanlage (22) mit Kältemittel und flüssigem Lösungsmittel, einer an dem Kältemittel armen und einer an dem Kältemittel reichen Lösung, wobei die arme und die reiche Lösung einphasige Mischungen des Lösungsmittels und des Kältemittels sind,
a. in dem Betriebszustand zum Bereitstellen das flüssige Kältemittel auf einem Hochdruckniveau verdampft und auf ein Niederdruckniveau entspannt wird und dabei eine Expansionsmaschine (35) antreibt, die arme Lösung das dampfförmige Kältemittel absorbiert, und als reiche Lösung gesammelt wird, und dass
b. in dem Betriebszustand zum Speichern stattdessen das Kältemittel auf dem Niederdruckniveau aus der reichen Lösung ausgetrieben, die verbleibende arme Lösung gesammelt, und das ausgetriebene Kältemittel mittels der elektrischen Energie auf das Hochdruckniveau verdichtet, verflüssigt und gesammelt wird.

2. Verfahren nach dem vorgenannten Anspruch, wobei mittels eines der Sorptionsanlage (22) von außen zugeführten Wärmestroms das flüssige Kältemittel verdampft und/oder das Kältemittel aus der reichen Lösung ausgetrieben wird.

3. Sorptionsanlage (1, 22) mit Kältemittel, flüssigem Lösungsmittel, einer an dem Kältemittel armen und einer an dem Kältemittel reichen Lösung, wobei die arme und die reiche Lösung einphasige Mischungen des Lösungsmittels und des Kältemittels sind, sowie mit
a. einem Absorber (8, 25) zum Absorbieren des Kältemittels in der armen Lösung unter Abgabe von Wärme,
b. einem Austreiber (4, 26) zum Austreiben des Kältemittels aus der reichen Lösung hinter dem Absorber (8, 25) unter Aufnahme eines ersten von außen zugeführten Wärmestroms,
c. einer Lösungsmittelpumpe (11, 30) zum Pumpen der armen Lösung aus dem Austreiber (4, 26) in den Absorber (8, 25),
d. einem Verflüssiger (6, 28) zum Verflüssigen des Kältemittels aus dem Austreiber (4, 26),
e. einem Verdichter (16, 36) zum Saugen des Kältemittels aus dem Austreiber (4, 26),
f. einem Verdampfer (7, 27) zum Verdampfen des Kältemittels aus dem Verflüssiger (6, 28) unter Aufnahme eines zweiten von außen zugeführten Wärmestroms vor dem Absorber (8, 25),
g. einem Kältemittelsammler (10, 33) hinter dem Verflüssiger (6, 28), und
h. einer Kältemittelpumpe (9, 32) zum Pumpen des Kältemittels aus dem Kältemittelsammler (10, 33) zu dem Verdampfer (7, 27), ***gekennzeichnet durch*** eine Absperrvorrichtung (19, 38) für den Verflüssiger (6, 28), wobei der Verdichter (16, 36) vor der Absperrvorrichtung (19, 38) an einer Druckseite mit einer Kältemittelleitung (15, 34) zwischen dem Verdampfer (7, 27) und dem Absorber (8, 25) verbunden ist, wobei die Sorptionsanlage (1, 22) durch wahlweises Öffnen oder Schließen der Absperrvorrichtung (19, 38) bzw. Antrieb des Verdichters (16, 36) und der Lösungsmittelpumpe (11, 30) zwischen zwei Betriebszuständen zum Speichern oder Bereitstellen von Energie bzw. zum Betrieb als Wärmepumpe oder Wärmetransformator umschaltbar ist.

4. Sorptionsanlage (1) nach dem vorgenannten Anspruch, umfassend ein Drosselelement zum Entspannen der reichen Lösung zwischen dem Absorber (8) und dem Austreiber (4).

5. Sorptionsanlage (22) nach Anspruch 3, umfassend eine Expansionsmaschine (35) zum Entspannen des Kältemittels zwischen dem Verdampfer (27) und dem Absorber (25), und einem Lösungssammler (29) zum Sammeln der reichen Lösung zwischen dem Absorber (25) und dem Austreiber (26).

6. Sorptionsanlage (22) nach dem vorgenannten Anspruch, umfassend mindestens eine weitere Lösungsmittelpumpe (31) von dem Absorber (25) und/oder dem Austreiber (26) zu dem Lösungssammler (29) und/oder von dem Lösungssammler (29) zu dem Absorber (25) und/oder dem Austreiber (26).

7. Sorptionsanlage (22) nach einem der Ansprüche 3 oder 4, wobei der Lösungssammler (29) ein Schichtenspeicher ist.

8. Sorptionsanlage nach einem der Ansprüche 3 bis 7, umfassend eine einzelne Fluidenergiemaschine, die wahlweise als der Verdichter oder als die Expansionsmaschine dient.

9. Sorptionsanlage nach einem der Ansprüche 3 bis 8, umfassend einen ersten Wärmetauscher, der sowohl als der Austreiber als auch als der Absorber und/oder einen zweiten Wärmetauscher, der sowohl als der Verflüssiger als auch als der Verdampfer dient.

10. Betriebsverfahren, mit dem eine Sorptionsanlage (1, 22) nach einem der Ansprüche 3 bis 9 betrieben wird, wobei in einem ersten der Betriebszustände
a. der Verdichter (16, 36) antriebslos und
b. der Verflüssiger (6, 28) mittels der Absperrvorrichtung (19, 38) von der Kältemittelleitung (15, 34) getrennt ist,
c. die Kältemittelpumpe (9, 32) das Kältemittel pumpt und
d. der Verdampfer (6, 27) das Kältemittel verdampft, wobei in einem zweiten der Betriebszustände anstelle der Merkmale a bis d des ersten der Betriebszustände
e. der Verdichter (16, 36) angetrieben wird und
f. das Kältemittel in die Kältemittelleitung (15, 34) führt.

11. Betriebsverfahren nach dem vorgenannten Anspruch, wobei
a. ein Drosselelement die reiche Lösung hinter dem Absorber (8) entspannt,
b. die Lösungsmittelpumpe (11) die arme Lösung pumpt, wobei
c. in dem Betriebszustand nacheinander
d. der Verflüssiger (6) das Kältemittel verflüssigt,
e. die Kältemittelpumpe (9, 32) das Kältemittel pumpt und
f. das Kältemittel in dem Verdampfer (6) verdampft.

12. Betriebsverfahren nach dem vorgenannten Anspruch, wobei beim Übergang in den ersten der Betriebszustände von dem anderen der Betriebszustände ein ausgekochter Anteil des Kältemittels in dem Kältemittelsammler (33) gesammelt wird.

13. Betriebsverfahren nach dem vorgenannten Anspruch, wobei zum Absenken des Niederdruckniveaus der Verflüssiger (6) vorübergehend mit der Kältemittelleitung (15) verbunden wird.

14. Betriebsverfahren nach Anspruch 10, wobei
a. in dem ersten der Betriebszustände Energie entladen wird, indem nacheinander
b. eine Expansionsmaschine (35) das Kältemittel in der Kältemittelleitung (34) entspannt und die Energie abgibt,
c. die arme Lösung das Kältemittel absorbiert, und
d. ein Lösungssammler (29) die reiche Lösung aus dem Absorber (25) sammelt, und wobei
e. in dem anderen der Betriebszustände Energie geladen wird, indem stattdessen nacheinander
f. die Lösungsmittelpumpe (30) die reiche Lösung aus dem Lösungssammler (29) in den Austreiber (26) pumpt,
g. der Verdichter (36) angetrieben wird und das Kältemittel in den Verflüssiger (28) führt,
h. der Verflüssiger (28) das Kältemittel verflüssigt, und
i. der Kältemittelsammler (33) das Kältemittel sammelt.

15. Betriebsverfahren nach dem vorgenannten Anspruch, wobei der Kältemittelsammler (10, 33) das Kältemittel bei höchstens 50 °C sammelt.

## Claims

1. A method for supplying energy, wherein in an operating state for storage, electrical energy is stored as chemical energy and after switching to an operating state for supply, the electrical energy is supplied, wherein
in a sorption system (22) with a refrigerant and liquid solvent, having a refrigerant-poor solution and a refrigerant-rich solution, wherein the poor and rich solutions are single-phase mixtures of the solvent and the refrigerant,
a. in the operating state for supply, the liquid refrigerant is evaporated at a high-pressure level and expanded to a low-pressure level, thereby driving an expansion machine (35), the poor solution absorbs the gaseous refrigerant and is collected as the rich solution, and
b. in the operating state for storage, the refrigerant is instead driven out of the rich solution at the low-pressure level, the remaining poor solution is collected, and the driven-out refrigerant is compressed to the high-pressure level by means of electrical energy, liquefied, and collected.

2. The method according to the preceding claim,
wherein
by means of a heat stream supplied to the sorption system (22) from the outside, the liquid refrigerant is evaporated and/or the refrigerant is driven out of the rich solution.

3. A sorption system (1, 22) with a refrigerant, a liquid solvent, a refrigerant-poor solution and a refrigerant-rich solution, wherein the poor and rich solutions are single-phase mixtures of the solvent and the refrigerant, comprising:
a. an absorber (8, 25) for absorbing the refrigerant in the poor solution with the release of heat,
b. a desorber (4, 26) for driving the refrigerant out of the rich solution downstream of the absorber (8, 25) while absorbing a first heat stream supplied from outside,
c. a solvent pump (11, 30) for pumping the poor solution from the desorber (4, 26) to the absorber (8, 25),
d. a condenser (6, 28) for liquefying the refrigerant from the desorber (4, 26),
e. a compressor (16, 36) for extracting the refrigerant from the desorber (4, 26),
f. an evaporator (7, 27) for evaporating the refrigerant from the condenser (6, 28) while absorbing a second heat stream supplied from outside upstream of the absorber (8, 25),
g. a refrigerant collector (10, 33) downstream of the condenser (6, 28), and
h. a refrigerant pump (9, 32) for pumping the refrigerant from the refrigerant collector (10, 33) to the evaporator (7, 27),
**characterized by**
a shut-off device (19, 38) for the condenser (6, 28), wherein the compressor (16, 36) is connected to a refrigerant line (15, 34) between the evaporator (7, 27) and the absorber (8, 25) at a pressure side upstream of the shut-off device (19, 38), wherein the sorption system (1, 22) can be switched between two operating states for storing or providing energy or for operating as a heat pump or heat transformer by selectively opening or closing the shut-off device (19, 38) or driving the compressor (16, 36) and the solvent pump (11, 30).

4. The sorption system (1) according to the preceding claim, comprising
a throttle element for relaxing the rich solution between the absorber (8) and the desorber (4).

5. The sorption system (22) according to Claim 3, comprising an expansion machine (35) for relaxing the refrigerant between the evaporator (27) and the absorber (25), and a solution collector (29) for collecting the rich solution between the absorber (25) and the desorber (26).

6. The sorption system (22) according to the preceding claim, comprising
at least one additional solvent pump (31) for pumping from the absorber (25) and/or the desorber (26) to the solution collector (29) and/or from the solution collector (29) to the absorber (25) and/or the desorber (26) .

7. The sorption system (22) according to any one of Claims 3 or 4, wherein
the solution collector (29) is a stratified storage tank.

8. The sorption system according to any one of Claims 3 to 7, comprising a single fluid energy machine that is used alternately as the compressor or as the expansion machine.

9. The sorption system according to any one of Claims 3 to 8, comprising
a first heat exchanger that is used as both the desorber and the absorber and/or a second heat exchanger that is used as both the condenser and the evaporator.

10. An operating method for operating a sorption system (1, 22) according to any one of Claims 3 to 9, wherein in a first of the operating states:
a. the compressor (16, 36) is idle and
b. the condenser (6, 28) is separated from the refrigerant line (15, 34) by means of the shut-off device (19, 38),
c. the refrigerant pump (9, 32) pumps the refrigerant and
d. the evaporator (6, 27) evaporates the refrigerant,
wherein
in a second of the operating states, instead of features a to d of the first of the operating states
e. the compressor (16, 36) is driven and
f. the refrigerant is introduced into the refrigerant line (15, 34).

11. The operating method according to the preceding claim, wherein
a. a throttle element expands the rich solution downstream of the absorber (8),
b. the solvent pump (11) pumps the poor solution, wherein
c. in the operating state, one after the other,
d. the condenser (6) liquefies the refrigerant,
e. the refrigerant pump (9, 32) pumps the refrigerant and
f. the refrigerant is evaporated in the evaporator (6) .

12. The operating method according to the preceding claim, wherein
upon transitioning to the first of the operating states from the other of the operating states, a distilled portion of the refrigerant is collected in the refrigerant collector (33).

13. The operating method according to the preceding claim, wherein
to lower the low-pressure level, the condenser (6) is temporarily connected to the refrigerant line (15).

14. The operating method according to Claim 10,
wherein
a. in the first of the operating states, energy is discharged in that, one after the other,
b. an expansion machine (35) expands the refrigerant in the refrigerant line (34) and delivers energy,
c. the poor solution absorbs the refrigerant and
d. a solution collector (29) collects the rich solution from the absorber (25) and wherein
e. in the other of the operating states, energy is charged in that, one after the other,
f. the solvent pump (30) pumps the rich solution from the solution collector (29) into the desorber (26),
g. the compressor (36) is driven and introduces the refrigerant into the condenser (28),
h. the condenser (28) liquefies the refrigerant and
i. the refrigerant collector (33) collects the refrigerant.

15. The operating method according to the preceding claim, wherein
the refrigerant collector (10, 33) collects the refrigerant at a maximum temperature of 50 °C.

## Revendications

1. Procédé de fourniture d'énergie, dans lequel, dans un état de fonctionnement de stockage d'énergie électrique, l'énergie électrique est stockée sous forme d'énergie chimique et, après le passage à un état de fonctionnement de fourniture, l'énergie électrique est distribuée, dans lequel dans une installation de sorption (22) avec réfrigérant et solvant liquide, une solution pauvre en réfrigérant et une solution riche en réfrigérant, dans lequel la solution pauvre et la solution riche sont des mélanges monophasiques du solvant et du réfrigérant,
a. dans l'état de fonctionnement de fourniture, le réfrigérant liquide est évaporé à un niveau de pression élevé et dilaté à un niveau de basse pression tout en entraînant une machine à expansion (35), la solution pauvre absorbe le réfrigérant sous forme de vapeur et est collectée sous forme d'une solution riche, et en ce que
b. dans l'état de fonctionnement de stockage, le réfrigérant est au lieu de cela expulsé de la solution riche au niveau de basse pression, la solution pauvre restante est collectée et le réfrigérant expulsé est comprimé, liquéfié et collecté jusqu'au niveau de haute pression au moyen de l'énergie électrique.

2. Procédé selon la revendication précitée, dans lequel au moyen d'un flux de chaleur introduit de l'extérieur dans l'installation de sorption (22), le réfrigérant liquide s'évapore et/ou le réfrigérant est expulsé de la solution riche.

3. Installation de sorption (1, 22) comportant un réfrigérant, un solvant liquide, une solution pauvre en réfrigérant et une solution riche en réfrigérant, dans lequel la solution pauvre et la solution riche sont des mélanges monophasiques du solvant et du réfrigérant, ainsi que comportant
a. un absorbeur (8, 25) pour absorber le réfrigérant présent dans la solution pauvre tout en libérant de la chaleur,
b. un expulseur (4, 26) pour expulser le réfrigérant de la solution riche derrière l'absorbeur (8, 25) tout en recevant un premier flux de chaleur introduit de l'extérieur,
c. une pompe à solvant (11, 30) pour pomper la solution pauvre depuis l'expulseur (4, 26) dans l'absorbeur (8, 25),
d. un condenseur (6, 28) pour liquéfier le réfrigérant provenant de l'expulseur (4, 26),
e. un compresseur (16, 36) pour aspirer le réfrigérant de l'expulseur (4, 26),
f. un évaporateur (7, 27) pour évaporer le réfrigérant du condenseur (6, 28) tout en recevant un deuxième flux de chaleur introduit de l'extérieur devant l'absorbeur (8, 25),
g. un collecteur de réfrigérant (10, 33) derrière le condenseur (6, 28), et
h. une pompe de réfrigérant (9, 32) pour pomper le réfrigérant du collecteur de réfrigérant (10, 33) vers l'évaporateur (7, 27),
**caractérisé par** un dispositif d'arrêt (19, 38) pour le condenseur (6, 28), dans lequel le compresseur (16, 36) devant le dispositif d'arrêt (19, 38) est relié sur un côté de pression avec une conduite de réfrigérant (15, 34) entre l'évaporateur (7, 27) et l'absorbeur (8, 25), dans lequel l'installation de sorption (1, 22) étant activée par soit l'ouverture, soit la fermeture du dispositif d'arrêt (19, 38) ou par l'entraînement du compresseur (16, 36) et de la pompe à solvant (11, 30) peut être commutée entre deux états de fonctionnement pour stocker ou fournir de l'énergie ou pour fonctionner comme pompe à chaleur ou transformateur de chaleur.

4. Installation de sorption (1) selon la revendication précédente, comprenant un élément d'étranglement pour dilater la solution riche entre l'absorbeur (8) et l'expulseur (4).

5. Installation de sorption (22) selon la revendication 3, comprenant une machine à expansion (35) pour dilater le réfrigérant entre l'évaporateur (27) et l'absorbeur (25), et un collecteur de solution (29) pour collecter la solution riche entre l'absorbeur (25) et l'expulseur (26).

6. Installation de sorption (22) selon la revendication précédente, comprenant une pompe à solvant (31) supplémentaire depuis l'absorbeur (25) et/ou l'expulseur (26) vers le collecteur de solution (29) et/ou depuis le collecteur de solution (29) vers l'absorbeur (25) et/ou l'expulseur (26).

7. Installation de sorption (22) selon une des revendications 3 ou 4, dans laquelle le collecteur de solution (29) est un accumulateur à stratification.

8. Installation de sorption selon une des revendications 3 à 7, comprenant une seule machine à énergie fluide qui sert soit de compresseur, soit de machine à expansion.

9. Installation de sorption selon une des revendications 3 à 8, comprenant un premier échangeur de chaleur, qui sert à la fois d'expulseur et d'absorbeur et/ou un deuxième échangeur de chaleur qui sert à la fois de condenseur et d'évaporateur.

10. Procédé de fonctionnement avec lequel une installation de sorption (1, 22) selon une des revendications 3 à 9 est exploitée, dans lequel dans un premier des états de fonctionnement
a. le compresseur (16, 36) n'est pas entraîné et
b. le condenseur (6, 28) est séparé de la conduite de réfrigérant (15, 34) au moyen du dispositif d'arrêt (19, 38),
c. la pompe de réfrigérant (9, 32) pompe le réfrigérant et
d. l'évaporateur (6, 27) évapore le réfrigérant, dans lequel dans un deuxième des états de fonctionnement, au lieu des caractéristiques a à d du premier des états de fonctionnement
e. le compresseur (16, 36) est entraîné et
f. le réfrigérant mène à la conduite de réfrigérant (15, 34).

11. Procédé d'exploitation selon la revendication précitée, dans lequel
a. un élément d'étranglement dilate la solution riche derrière l'absorbeur (8),
b. la pompe à solvant (11) pompe la solution pauvre, moyennant quoi
c. en état de fonctionnement l'un après l'autre
d. le condenseur (6) liquéfie le réfrigérant,
e. la pompe de réfrigérant (9, 32) pompe le réfrigérant et
f. le réfrigérant s'évapore dans l'évaporateur (6).

12. Procédé d'exploitation selon la revendication précitée, dans lequel en passant au premier des états de fonctionnement à partir de l'autre des états de fonctionnement, une partie bouillie du réfrigérant est collectée dans le collecteur de réfrigérant (33).

13. Procédé d'exploitation selon la revendication précitée, dans lequel pour abaisser le niveau de basse pression, le condenseur (6) est temporairement relié à la conduite de réfrigérant (15).

14. Procédé d'exploitation selon la revendication 10, dans lequel
a. dans le premier des états de fonctionnement, l'énergie est déchargée, en ce que successivement
b. une machine à expansion (35) dilate le réfrigérant dans la conduite de réfrigérant (34) et libère l'énergie,
c. la solution pauvre absorbe le réfrigérant, et
d. un collecteur de solution (29) collecte la solution riche provenant de l'absorbeur (25), et dans lequel
e. dans les autres des états de fonctionnement, en ce que au lieu de cela successivement
f. la pompe à solvant (30) pompe la solution riche hors du collecteur de solution (29) et dans l'expulseur (26),
g. le compresseur (36) est entraîné et guide le réfrigérant dans le condenseur (28),
h. le condenseur (28) liquéfie le réfrigérant, et
i. le collecteur de réfrigérant (33) collecte le réfrigérant.

15. Procédé d'exploitation selon la revendication précitée, dans lequel le collecteur de réfrigérant (10, 33) collecte le réfrigérant jusqu'à un maximum de 50 °C.
